# EUROPEAN PATENT SPECIFICATION

(11) **EP 0 881 624 B1**
(45) Date of publication and mention of the grant of the patent: **23.04.2003**
(21) Application number: 98109901.3
(22) Date of filing: 29.05.1998
(51) Int. Cl.: G10K 11/00

(54) **Ultrasonic sensor and its ultrasonic resonator**
Ultraschallsensor und sein Ultraschall-Resonator
Capteur à ultrasons et son résonnateur ultrasonique

(30) Priority: 30.05.1997 JP 14233697
(43) Date of publication of application: 02.12.1998
(73) Proprietor: Denso Corporation, Kariya-city, Aichi-pref., 448-8661 (JP)
(72) Inventor: Tsuzuki, Takeo, c/o Denso Corporation, Kariya-city, Aichi-pref. 448 (JP)
(74) Representative: Winter, Brandl, Fürniss, Hübner, Röss, Kaiser, Polte Partnerschaft

(56) References cited:
- DE-A- 3 939 387
- GB-A- 2 317 316
- JP-A- 9 009 395
- PATENT ABSTRACTS OF JAPAN vol. 006, no. 225 (P-154), 10 November 1982 (1982-11-10) -& JP 57 128867 A (NIPPON DENSO KK), 10 August 1982 (1982-08-10)

## Description

### CROSS-REFERENCE TO RELATED APPLICATION

This application is based upon and claims benefit of priority of Japanese Patent Application No. Hei-9-142336 filed on May 30, 1997.

### BACKGROUND OF THE INVENTION

### 1. Field of the Invention

The present invention relates to an ultrasonic sensor and an ultrasonic resonator for use in the ultrasonic sensor. The ultrasonic sensor is used in an automobile for detecting obstacles located backward and/or forward corners of the automobile.

### 2. Description of Related Art

An ultrasonic sensor of this kind has been known hitherto and used in an automobile. The ultrasonic sensor installed on a rear bumper transmits ultrasonic wave backward and receives ultrasonic wave reflected by obstacles located at a back area or back corners of the automobile, when the automobile is driven backward for parking or other purposes. When the obstacles are detected by the sensor, a driver is warned and he can avoid hitting the obstacles. An ultrasonic resonator is mounted in a case of the ultrasonic sensor. The ultrasonic resonator includes a piezoelectric element attached to a round resonator surface. The piezoelectric element is driven by electrical voltage, and ultrasonic vibration is generated therein by piezoelectric effect. The ultrasonic wave is transmitted backward from the resonator surface, and the resonator surface receives the ultrasonic wave reflected by the obstacles. Electrical voltage is generated in the piezoelectric element according to the reflected ultrasonic wave by reverse piezoelectric effect and processed by a signal processing circuit installed in the sensor.

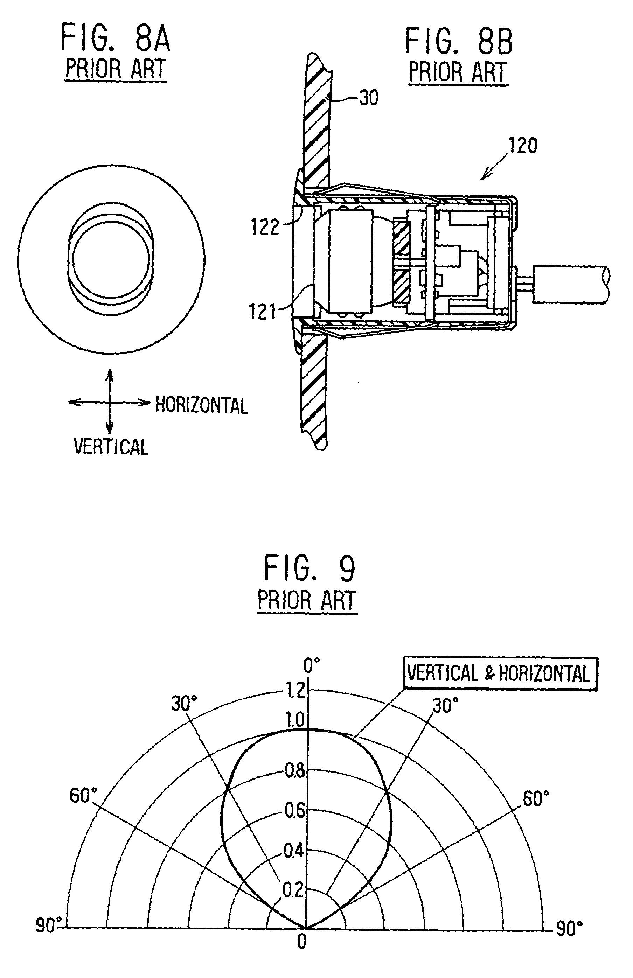

Usually, a conventional ultrasonic resonator has an angular range which is equal in both vertical and horizontal directions. However, it is desirable for the sensor to cover a wider angle in the horizontal direction than in the vertical direction and not to detect the ground surface as an obstacle. To obtain the desired angular range some conventional sensors include a horn attached to its front having an oval opening with an longer axis in the vertical direction. An example of a conventional ultrasonic sensor is shown in FIGS. 8A and 8B, showing a front view and a cross-sectional view, respectively. As shown in FIG. 8B, ultrasonic sensor 120 is installed on rear bumper 30. Ultrasonic sensor 120 has an ultrasonic resonator for transmitting ultrasonic wave therefrom and receiving ultrasonic wave reflected by obstacles. This particular resonator has an angular range which is equal in both vertical and horizontal directions as shown in FIG. 9. The ultrasonic wave generated in the resonator is transmitted from a resonator surface 121 through an opening 122 which forms a horn. Resonator surface 121 of the ultrasonic resonator mounted in sensor 120 is located behind the front surface of opening 122, thereby forming a depressed space. Since the sensor is mounted on the rear bumper, some dirt or snow will be accumulated in the depressed space, which adversely affects detection ability of the ultrasonic sensor. In addition, the depressed space in front of the sensor may not be desirable from a design or ornamental standpoint.

### SUMMARY OF THE INVENTION

In view of the above problem, an ultrasonic resonator having an angular range which is wider in the horizontal direction in itself and having a round resonator surface has been proposed recently. However, to correctly mount this kind of ultrasonic resonator in the case of the sensor, a special attention has to be paid not to make error in its mounting direction. In other words, there is a possibility that the ultrasonic resonator is mounted in the case with a wrong direction.

The present invention which is defined in claim 1 has been made in view of the above-mentioned problems, and an object of the present invention is to provide an ultrasonic sensor including an ultrasonic resonator which has an unequal angular range in the horizontal and vertical directions and is easily assembled into the sensor without making a directional error in the assembling process. Another object is to provide an ultrasonic sensor structure which prevents accumulation of dirt, snow or other foreign objects on the front surface of the sensor.

An ultrasonic resonator is composed of a cylindrical housing with a front surface closed, and a piezoelectric element attached to the front surface. The front surface of the housing constitutes a resonator surface from which ultrasonic wave is transmitted and by which ultrasonic wave reflected by obstacles is received. An angular range of the ultrasonic resonator is unequal in horizontal and vertical directions. Namely, it covers a wider angle in the horizontal direction than in the vertical direction, for example. On the outer cylindrical surface of the metallic housing, a flat surface, preferably a pair of flat surfaces, is formed. The flat surface serves to identify a particular direction, e.g., the horizontal direction, of the ultrasonic resonator when the resonator is inserted into a cylindrical sensor case.

The ultrasonic sensor is composed of a cylindrical resin case, the ultrasonic resonator and a signal processing circuit. The ultrasonic resonator is positioned in the resin case so that the front surface of the resonator is substantially coplanar with a front opening of the resin case, leaving no depressed space in the front. This structure serves to avoid accumulation of any foreign materials such as dirt and snow in the front of the sensor. A flat surface, preferably a pair of flat surfaces, is formed on the outer cylindrical surface of the case, so that the horizontal direction is identified when the ultrasonic sensor is installed on a bumper of an automobile. An oval hole is made on the bumper to receive the ultrasonic sensor therein, and accordingly the ultrasonic sensor is correctly positioned on the bumper.

Other objects and features of the present invention will become more readily apparent from a better understanding of the preferred embodiment described below with reference to the following drawings.

### BRIEF DESCRIPTION OF THE DRAWINGS

FIG. 1A is a front view of an ultrasonic resonator according to the present invention;
FIG. 1B is a side view of the ultrasonic resonator shown in FIG. 1A;
FIG. 1C is a rear view of the ultrasonic resonator shown in FIG. 1A;
FIG. 1D is a cross-sectional view of the ultrasonic resonator shown in FIG. 1A, taken along a line ID-ID in FIG. 1E;
FIG. 1E is a rear view showing the ultrasonic resonator shown in FIG. 1A, filler material being removed from a housing;
FIG. 2 is a diagram showing an angular range of the ultrasonic resonator in both horizontal and vertical directions;
FIG. 3A is a front view showing an ultrasonic sensor of the present invention, which is mounted on a rear bumper of an automobile;
FIG. 3B is a cross-sectional view showing the ultrasonic sensor shown in FIG. 3A;
FIG. 4 is a plan view showing a bumper which has an oval hole for mounting the ultrasonic sensor therein;
FIG. 5A is a perspective view showing a case of the ultrasonic sensor;
FIG. 5B is a rear view showing the case shown in FIG. 5A;
FIGS. 6A and 6B show a modified form of the ultrasonic resonator according to the present invention, showing a front view and a side view, respectively;
FIGS. 7A and 7B show another modified form of the ultrasonic resonator according to the present invention, showing a front view and a side view, respectively;
FIGS. 8A and 8B show an example of a conventional ultrasonic sensor, showing a front view and a cross-sectional view, respectively; and
FIG. 9 is a diagram showing an angular range of the conventional ultrasonic resonator shown in FIGS. 8A and 8B.

### DETAILED DESCRIPTION OF THE PREFERRED EMBODIMENT

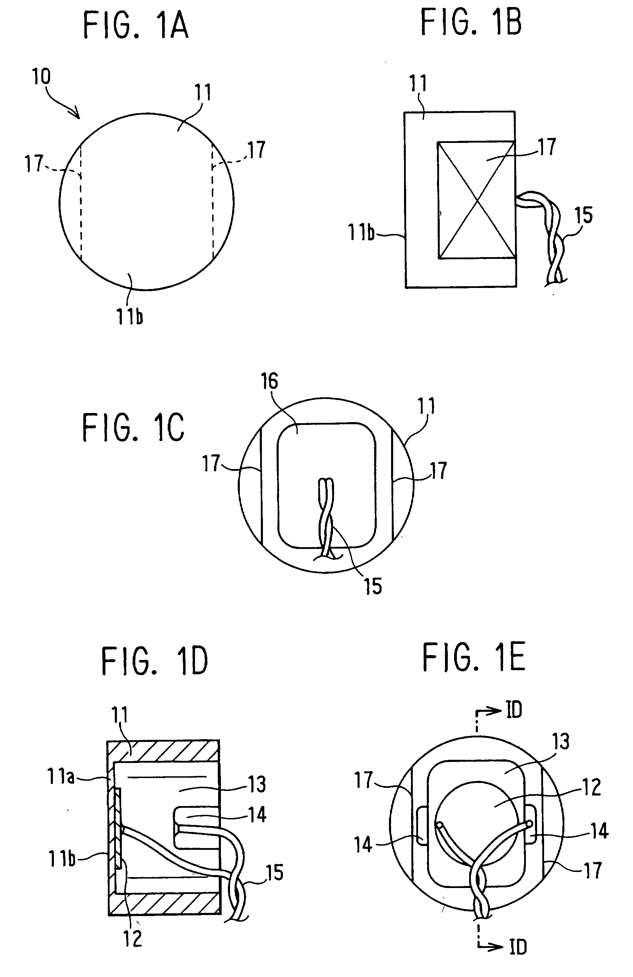

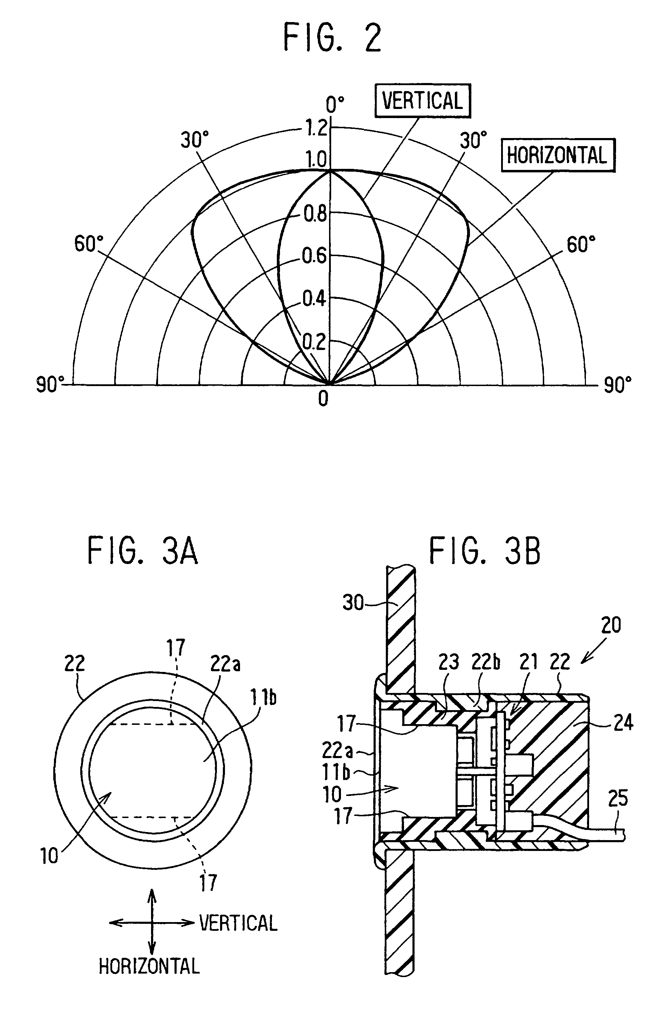

Referring to FIGS. 1A to 1E, an embodiment of an ultrasonic resonator according to the present invention will be described. Ultrasonic resonator 10 is composed of metallic housing 11 having a cylindrical shape with one end closed by an end wall 11a, piezoelectric element 12 attached to end wall 11a, lead wires 15 for supplying voltage to piezoelectric element 12, and filler 16 filling inner space 13 of housing 11. End wall 11a is round and has resonator surface 11b from which ultrasonic wave is transmitted and by which ultrasonic wave reflected by obstacles is received. One of lead wires 15 is soldered to one surface of piezoelectric element 12, and the other one of lead wires 15 is soldered to notch 14 formed in housing 11. Alternating voltage is imposed on both surfaces of piezoelectric element 12 through lead wires 15. Inner space 13 has a rectangular cross-section with longer vertical sides and shorter horizontal sides, as shown in FIGS. 1C and 1E. Rectangular inner space 13 provides the ultrasonic resonator with an unequal angular range in the horizontal and vertical directions as shown in FIG. 2. As seen in FIG. 2, resonator 10 covers a wider angle in the horizontal direction than in the vertical direction. After piezoelectric element 12 is attached to end wall 11a and lead wires 15 are soldered to the respective positions, inner space 13 is filled with filler 16 consisting of felts and silicone resin.

Flat surfaces 17 are formed at an outer cylindrical surface of metallic housing 11. Flat surfaces 17 are parallel to the longer sides of inner space 13, and thereby serve to identify the horizontal direction of ultrasonic resonator 10 when it is assembled.

FIGS. 3A and 3B show ultrasonic sensor 20 in which ultrasonic resonator 10 described above is assembled. FIG. 3A is a front view, and FIG. 3B is a cross-sectional view of ultrasonic sensor 20. Ultrasonic sensor 20 is composed of case 22 made of resin, ultrasonic resonator 10 inserted into case 22, signal processing circuit 21 for supplying voltage to piezoelectric element 12 and processing voltage generated in piezoelectric element 12 by reverse piezoelectric effect, and silicone resin 24 filled in the back space of case 22 for protecting the inside components from humidity. Ultrasonic sensor 20 is mounted on rear bumper 30, for example, and transmits ultrasonic wave of about 40 KHz and receives ultrasonic wave of the same frequency reflected by the obstacles.

Shock absorbing member 23 made of silicone rubber is inserted between ultrasonic resonator 10 and case 22. Shock absorbing member 23 alleviates transmission of vibration generated in ultrasonic resonator 10 to case 22. Signal processing circuit 21 is connected to an outside controller (not shown) through wire harness 25. Case 22 has circular opening 22a through which ultrasonic resonator 10 is inserted. Case 22 also has stub 22b which determines the axial position of shock absorbing member 23 and ultrasonic resonator 10. Resonator surface 11b is positioned coaxially with circular opening 22a and at the almost same axial position as circular opening 22a, thereby making substantially no depressed space in front of resonator surface 11b. Lead wires 15 of ultrasonic resonator 10 are connected to signal processing circuit 21 by soldering, and signal processing circuit 21 is inserted into case 22 from the right side of FIG. 3B. Then, silicone resin 24 is filled in the back space of case 22. Thus, assembling of ultrasonic sensor 20 is completed.

When ultrasonic resonator 10 is inserted from circular opening 22a of case 22, its angular position inside case 22 is determined by flat surfaces 17 which fit with flat surfaces of shock absorbing member 23. Flat surfaces 17 formed on the outer cylindrical surface of ultrasonic resonator 10 serve to avoid mispositioning of resonator 10 in case 22. Since ultrasonic resonator 10 has an angular range which are different in the horizonal and vertical positions, as mentioned above, its mispositioning in the assembling process has to be avoided without fail. Though resonator 10 can be assembled upside down in case 22 (rotated by 180 degrees), it must not take other positions.

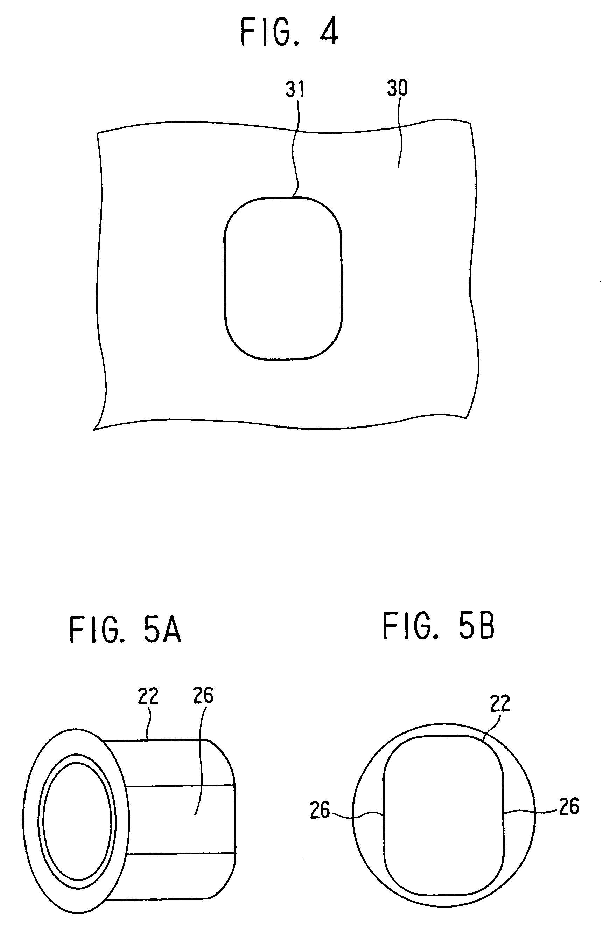

When ultrasonic sensor 20 is mounted on rear bumper 30, it must be positioned correctly so that it covers a wider angle in the horizontal direction. For this purpose, rear bumper 30 has oval hole 31 for mounting ultrasonic sensor 20 therein as shown in FIG. 4, and case 22 of sensor 20 has flat surfaces 26 which fit with the longer sides of oval hole 31 when case 22 is inserted into oval hole 31 to a position where a flange portion of case 22 contacts bumper 30 as shown in FIGS. 5A and 5B. By this structure, ultrasonic sensor 20 can be positioned correctly on rear bumper 30 without fail.

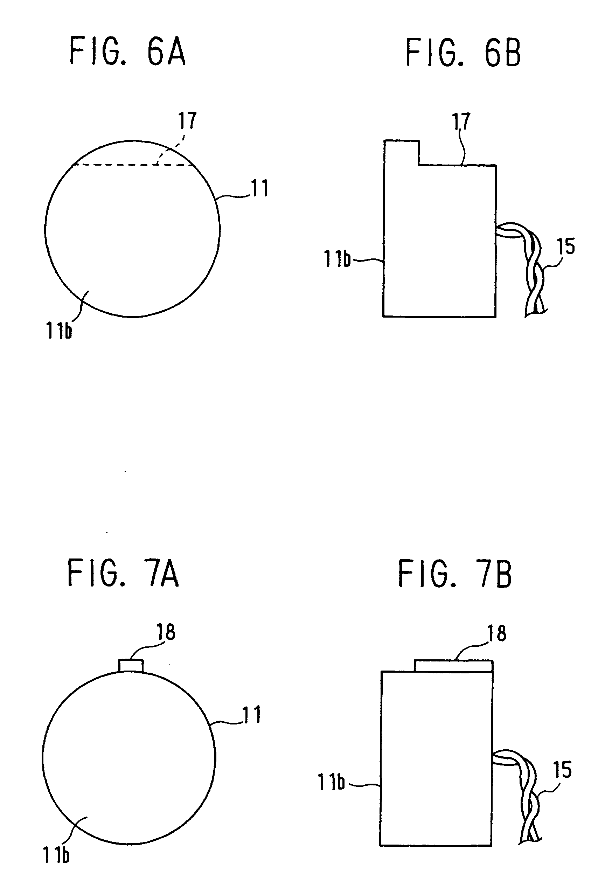

FIGS. 6A and 6B show a modified form of ultrasonic resonator 10 which as only one flat surface 17 formed on the outer peripheral surface of metallic housing 11 in place of a pair of flat surfaces 17 shown in the foregoing embodiment. Single flat surface 17 can serve to position ultrasonic resonator 10 correctly in sensor housing 22 in the same manner as in the foregoing embodiment. Another example of modification is shown in FIGS. 7A and 7B, in which stub 18 for correctly positioning ultrasonic resonator 10 in sensor case 22 is formed on the outer surface of housing 11. Stub 18 also serves to avoid misassembling of resonator 10 in a similar manner as in the foregoing embodiment. Various forms other than those exemplified above may be possible to correctly position ultrasonic resonator 10 in sensor case 22 and ultrasonic sensor 20 on rear bumper 30.

Though ultrasonic sensor 20 is mounted on rear bumper 30 to detect obstacles in the rear of an automobile in the embodiment described above, it may be mounted on a front bumper to detect obstacles in the front. Also, ultrasonic sensor 20 may be mounted on both front and rear bumpers, or two sensors may be mounted on both left and right corners of the bumper, respectively.

While the present invention has been shown and described with reference to the foregoing preferred embodiment, it will be apparent to those skilled in the art that changes in form and detail may be made therein without departing from the scope of the invention as defined in the appended claims.

## Claims

1. An ultrasonic resonator (10) for use in an ultrasonic sensor (20), the ultrasonic resonator (10) having an angular range which is unequal in horizontal and vertical directions, the ultrasonic resonator comprising:
- a cylindrical housing (11) having a front end wall (11a) which provides a circular resonator surface (11b) from which ultrasonic wave is transmitted and an outer peripheral surface;
- a piezoelectric element (12) attached to an inner surface of the front wall, electrical voltage being supplied to the piezoelectric element thereby to generate the ultrasonic wave,
**characterized in that**
- said cylindrical housing (11) has an inner space (13) which has a rectangular cross-section perpendicular to the principal axis of said cylindrical housing, with longer vertical sides and shorter horizontal sides, and provides said angular range, and further comprises
- means (17, 18), for identifying the horizontal direction of the ultrasonic resonator, formed on the outer peripheral surface of the cylindrical housing.

2. The ultrasonic resonator as in claim 1, wherein:
the identifying means includes at least one flat surface (17) formed on the outer peripheral surface.

3. The ultrasonic resonator as in claim 1, wherein:
the identifying means includes at least one stub (18) formed on the outer peripheral surface.

4. An ultrasonic sensor (20) comprising:
- the resonator (10) defined in claim 1, 2, or 3; and
- a case (22) for containing the resonator therein.

5. The ultrasonic sensor as in claim 4, wherein:
- the case (22) includes a front opening (22a); and
- the ultrasonic resonator (10) is contained in the case so that the resonator surface (11b) is positioned substantially on a same plane with the front opening.

6. The ultrasonic sensor as in claim 5, wherein:
- the front opening (22a) of the case has a circular shape; and
- the resonator surface (11b) is positioned coaxially with the front opening of the case.

7. The ultrasonic sensor as in any one of claims 4 - 7, wherein:
- the case (22) includes an outer peripheral surface; and
- second means (26) for identifying the horizontal direction of the ultrasonic sensor is formed on the outer peripheral surface of the case.

8. The ultrasonic sensor as in claim 7, wherein:
the second identifying means includes at least one flat surface (26) formed on the outer peripheral surface of the case.

9. The ultrasonic sensor as in any one of claims 4 - 8, wherein:
- the ultrasonic sensor (20) further includes a signal processing circuit (21);
- the case (22) has a cylindrical shape with a front opening (22a) and a rear opening;
- the ultrasonic resonator (10) is inserted into the case (22) from the front opening (22a);
the signal processing circuit (21) is inserted into the case (22) from the rear opening; and
- a material (24) for protecting the ultrasonic resonator and the signal processing circuit contained in the case from outer humidity is filled in the case (22) behind the signal processing circuit.

10. The ultrasonic sensor as in any one of claims 4 - 9, wherein:
a portion (22b) contacting and engaging with the identifying means (17, 18) is formed inside the case (22).

## Patentansprüche

1. Ultraschallresonator (10) zur Verwendung in einem Ultraschallsensor (20), wobei der Ultraschallresonator (10) einen Winkelbereich aufweist, der in horizontaler und vertikaler Richtung verschieden ist, wobei der Ultraschallresonator Folgendes umfasst:
- ein zylindrisches Gehäuse (11) mit einer vorderen Endwandung (11a), die eine kreisförmige Resonatoroberfläche (11b) bereitstellt, von der eine Ultraschallwelle übertragen wird, sowie einer äußeren Umfangsfläche;
- ein piezoelektrisches Element (12), das an einer inneren Oberfläche der vorderen Endwandung befestigt ist, wobei eine elektrische Spannung an dem piezoelektrischen Element angelegt ist, um dadurch die Ultraschallwelle zu erzeugen,
**dadurch gekennzeichnet, dass**
- das zylindrische Gehäuse (11) einen inneren Raum (13) umfasst, der senkrecht zu der Hauptachse des zylindrischen Gehäuses einen rechteckigen Querschnitt, mit längeren vertikalen Seiten und kürzeren horizontalen Seiten aufweist und den Winkelbereich liefert, und darüber hinaus
- ein Mittel (17, 18) zur Kennzeichnung der horizontalen Richtung des Ultraschallresonators umfasst, das an der äußeren Umfangsoberfläche des zylindrischen Gehäuses ausgebildet ist.

2. Ultraschallresonator nach Anspruch 1, wobei das Kennzeichnungsmittel wenigstens einen flache Oberfläche (17) umfasst, die an der äußeren Umfangsoberfläche ausgebildet ist.

3. Ultraschallresonator nach Anspruch 1, wobei das Kennzeichnungsmittel wenigstens einen Vorsprung (18) umfasst, der an der äußeren Umfangsoberfläche ausgebildet ist.

4. Ultraschallsensor (20), der Folgendes umfasst:
- den in Anspruch 1, 2 oder 3 definierten Resonator (10); und
- ein Gehäuse (22), um den Resonator darin aufzunehmen.

5. Ultraschallsensor nach Anspruch 4, wobei
- das Gehäuse (22) eine vordere Öffnung (22a) umfasst; und
- der Ultraschallresonator (10) in dem Gehäuse so aufgenommen ist, dass die Resonatoroberfläche (11b) im Wesentlichen in der selben Ebene wie die vordere Öffnung angeordnet ist.

6. Ultraschallsensor nach Anspruch 5, wobei
- die vordere Öffnung (22a) des Gehäuses kreisförmig ist; und
- die Resonatoroberfläche (11b) koaxial zu der vorderen Öffnung des Gehäuses angeordnet ist.

7. Ultraschallsensor nach einem der Ansprüche 4 bis 7, wobei
- das Gehäuse (22) eine äußere Umfangsoberfläche aufweist; und
- ein zweites Mittel (26) zur Kennzeichnung der horizontalen Richtung des Ultraschallsensors auf der äußeren Umfangsoberfläche des Gehäuses ausgebildet ist.

8. Ultraschallsensor nach Anspruch 7, wobei das zweite Kennzeichnungsmittel wenigstens eine flache Oberfläche (26) aufweist, die auf der äußeren Umfangsoberfläche des Gehäuses ausgebildet ist.

9. Ultraschallsensor nach einem der Ansprüche 4 bis 8, wobei
- der Ultraschallsensor (20) ferner eine Signalverarbeitungsschaltung (21) umfasst;
- das Gehäuse (22) zylinderförmig ist, mit einer vorderen Öffnung (22a) und einer hinteren Öffnung;
- der Ultraschallresonator (10) von der vorderern Öffnung (22a) in das Gehäuse (22) eingeschoben ist;
- die Signalverarbeitungsschaltung (21) von der hinteren Öffnung in das Gehäuse (22) eingeführt ist;
- ein Material (24) zum Schutz des Ultraschallresonators und der Signalverarbeitungsschaltung, die in dem Gehäuse enthalten sind, vor äußerer Feuchtigkeit hinter der Signalverarbeitungsschaltung in das Gehäuse (22) gefüllt ist.

10. Ultraschallsensor nach einem der Ansprüche 4 bis 9, wobei ein Abschnitt (22b), der in Kontakt und in Eingriff mit den Kennzeichnungsmittel (17, 18) ist, ist im Inneren des Gehäuses (22) ausgebildet.

## Revendications

1. Résonateur à ultrasons (10) pour utilisation dans un capteur à ultrasons (20), le résonateur à ultrasons ayant une plage angulaire qui est inégale dans les directions horizontale et verticale, le résonateur à ultrasons comprenant :
- un logement cylindrique (11) ayant une paroi d'extrémité avant (11a) qui procure une surface de résonateur circulaire (11b) à partir de laquelle une onde ultrason est transmise, et une surface périphérique extérieure ;
- un élément piézoélectrique (12) fixé à une surface interne de la paroi d'extrémité avant, une tension électrique étant délivrée à l'élément piézoélectrique pour générer, en conséquence, bonde ultrason,
**caractérisé en ce que**
- ledit logement cylindrique (11) a un espace intern (13) ayant une section transversale perpendiculaire au grand axe dudit logement cylindrique, avec des parois verticales à une longueur supérieure et des parois horizontales à une longueur inférieure, ledit espace procurant ladite plage angulaire, ledit logement cylindrique comprenant en outre
- un moyen (17, 18) pour identifier ladite direction horizontale du résonateur à ultrasons formé sur la surface périphérique extérieure.

2. Résonateur à ultrasons selon la revendication 1, dans lequel :
le moyen d'identification inclut au moins une surface plate (17) formée sur la surface périphérique externe.

3. Résonateur à ultrasons selon la revendication 1, dans lequel le moyen d'identification inclut au moins un tronçon (18) formé sur la surface périphérique externe.

4. Capteur à ultrasons (20) comprenant :
- le résonateur (10) défini selon la revendication 1, 2 ou 3 ; et
- un boîtier (22) pour contenir dans celui-ci le résonateur.

5. Capteur à ultrasons selon la revendication 4, dans lequel :
- le boîtier (22) inclut une ouverture frontale (22a) ; et
- le résonateur à ultrasons (10) est contenu dans le boîtier de sorte que la surface du résonateur (11b) est positionnée sensiblement sur un même plan que l'ouverture frontale.

6. Capteur à ultrasons selon la revendication 5, dans lequel :
- l'ouverture frontale (22a) du boîtier présente une forme circulaire ; et
- la surface de résonateur (llb) est positionnée coaxialement avec l'ouverture frontale du boîtier.

7. Capteur à ultrasons selon l'une quelconque des revendications 4 à 7, dans lequel :
- le boîtier (22) inclut une surface périphérique externe ; et
- un second moyen (26) pour identifier la direction horizontale de capteur à ultrasons est formé sur la surface périphérique externe du boîtier.

8. Capteur à ultrasons selon la revendication 7, dans lequel le second moyen d'identification inclut au moins une surface plate (26) formée sur la surface périphérique externe du boîtier.

9. Capteur à ultrasons selon l'une quelconque des revendications 4 à 8, dans lequel :
- le capteur à ultrasons (20) inclut, en outre, un circuit de traitement de signal (21) ;
- le boîtier (22) présente une forme cylindrique avec une ouverture frontale (22a) et une ouverture arrière ;
- le résonateur à ultrasons (10) est introduit dans le boîtier (22) depuis l'ouverture frontale (22a) ;
- le circuit de traitement de signal (21) est introduit dans le boîtier (22) depuis l'ouverture arrière ; et
- un matériau (24) pour protéger le résonateur à ultrasons et le circuit de traitement de signal contenus dans le boîtier de l'humidité externe est garni dans le boîtier (22) derrière le circuit de traitement de signal.

10. Capteur à ultrasons selon l'une quelconque des revendications 4 à 9, dans lequel une partie (22b) contactant et mettant en prise le moyen d'identification (17, 18) est formée à l'intérieur du boîtier (22).
